# EUROPEAN PATENT SPECIFICATION

(11) **EP 0 285 390 B1**
(45) Date of publication and mention of the grant of the patent: **08.06.1994**
(21) Application number: 88302823.5
(22) Date of filing: 30.03.1988
(51) Int. Cl.: G07B 17/02

(54) **Franking machine**
Frankiermaschine
Machine à affranchir

(30) Priority: 03.04.1987 GB 8708031
(43) Date of publication of application: 05.10.1988
(73) Proprietor: NEOPOST LIMITED, Romford, Essex RM1 2AR (GB)
(72) Inventor: Abumehdi, Cyrus, Harlow Essex, CM19 4PR (GB)
(74) Representative: Loughrey, Richard Vivian Patrick

(56) References cited:
- EP-A- 0 077 657
- EP-A- 0 088 429
- EP-A- 0 125 526
- GB-A- 2 173 741
- US-A- 4 466 079
- US-A- 4 642 791
- IBM TECHNICAL DISCLOSURE BULLETIN, vol. 27, no. 9, February 1985, pages 5244-5245, IBM Corp.; J.N. BROWN et al.: "Printer sharing attachment for personal computer"
- IBM TECHNICAL DISCLOSURE BULLETIN, vol. 28, no. 6, November 1985, pages 2451-2452, IBM Corp.; "RS-232 and RS-422 converter for an IBM personal computer"

## Description

This invention relates to franking machines and in particular to the provision of facilities to enable communication between such machines and other devices for the transfer of data.

In order to prevent fraudulent use of franking machines, the electronic circuits for carrying out accounting functions and for registering data relating to transactions carried out by the machine are housed within a secure casing to prevent unauthorised access to the circuits. Commonly, means are provided to prevent unauthorised transactions which, in the event of attempted fraudulent use, render the franking machine inoperative. The machine then has to be returned to a service depot for validation of the data stored in the electronic circuits and to be rendered operative for franking operations once again.

For use with postal authorities which require prepayment for franking, the franking machine is provided with means to receive a value of credit available for franking which, in the course of subsequent franking operations, is decremented by the value of franking effected. When the credit value is less than the intended value of franking, the franking machine or at least that part containing the accounting and register circuits needs to be taken to the postal authority for the entry of further credit. In order to permit this authorised entry of credit, the machine is provided with means such as a switch located behind a sealed access for operation by the postal authority to place the accounting and control circuits in a state to accept and register the credit. After updating the credit the access is re-sealed by the postal authority to prevent unauthorised credit updating. It has also been proposed to update credit remotely, without the necessity of returning the machine to the resetting authority, by using the telephone to communicate data from the postal authority to the user to enable the user to enter the updated credit. This is accomplished by orally informing the user of a code which contains, in encrypted form, data relating to that specific machine and to the current update of credit. The user then has to key in on the keyboard of the machine the code communicated to him and, provided the code is validated by the machine, the new credit amount is added to that registered by the machine.

Thus it will be appreciated that the only permitted access to the machine for a user is by means of the keyboard. As a result transfer of data into and out of the franking machine requires the intervention of an operator to key in the data or to read data from a display on the machine.

In a further known method of updating credit data in the franking machine, the data is stored in a portable member which has an electronic storage device contained in it and the franking machine is provided with an electrical connector which allows a user to connect the portable member to the internal circuits of the franking machine. To prevent fraudulent alteration to the data stored in the portable member, the data is stored in encrypted form which may use a code unique to that franking machine. The internal circuits of the franking machine include decoding algorithms and circuits responsive only to correctly encrypted data to allow updating of credit data in the registers of the franking machine. The encryption of the data also prevents fraudulent entry of data by the application of electrical signals directly to the contacts of the connector of the franking machine. The transfer of data as described hereinbefore is concerned with secure data such as data relating to credit held in a descending register. Furthermore transfer of other encrypted data such as the accumulated value of franking held in an ascending register and transaction code data may be transferred from the franking machine by reading such encrypted data out into the storage device of the portable member. However it is also desirable to be able to transfer non-secure data to and from the franking machine. For example it may be desired to connect a weighscale to permit the input of signals from the weighscale indicating the value of franking, dependent upon the weight of a mail item, to the accounting circuit. Another example is the output of signals from the franking machine to a printer to maintain a hard copy tally of franking transactions.

It would be convenient for credit updating to the registers in the machine, for providing data on the status of the registers in the machine to the postal authority and for transfer of non-secure data to be able to provide means whereby transfer of data could be carried out not only by use of the portable member referred to hereinbefore but also by direct electrical connection of the franking machine with other devices.

However a difficulty arises because the devices which it is desired to connect to the franking machine may operate to communicate data using different interface standards. For example some devices may operate to the so-called RS232 standard, other devices may operate to the so-called RS422 standard and other devices may operate to other standards such as current loop or even in the future may be designed to operate to standards which have not yet been devised. As a result it is necessary to construct the franking machine with an interface designed specifically for communication with devices operating to only one standard. Whenever communication is desired with a device operating to a different standard, a different specific interface must be built into the franking machine. This is particularly inconvenient in relation to franking machines because each and every different design and construction of franking machine must be submitted for evaluation and approval to the relevant postal authorities before those machines may be marketed for use by customers. This is an inconvenient and time consuming operation and when new devices become available and are desired to be used by connection with a franking machine, if they operate to a new communication standard, they can only be used after the inevitable delay involved in designing and obtaining approval for the franking machine with an interface operating to the new standard.

US patent specification 4,466,079 discloses a mailing system in which a system processor is connectable to selected peripheral devices including electronic postage meters. Connection of the system processor to the peripheral devices is by means of a peripheral interface controller which is external both to the system processor and to the postage meters. Accordingly external communication with the postage meters takes place with a communication protocol determined by the postage meters. This protocol is not changeable and hence any communication with the postage meters in a different communication protocol requires the provision of the external interface controller. For a user of a postage meter the requirement for an interface controller external to the postage meter is inconvenient and furthermore as disclosed in this US patent specification the postage meter is not able to control the interface controller, any control of the controller being performed by the system processor.

According to one aspect of the invention a franking machine for franking items of mail including electronic means to carry out accounting functions in relation to usage of the machine in franking operations; storage registers connected to said electronic means to store account records; said electronic means being responsive to command signals to carry out functions indicated by said command signals; a secure housing securely containing said electronic means and said storage registers; a communications port extending through a wall of said housing to which a peripheral device external to the franking machine may be connected to communicate with said electronic means; is characterised in that the communications port is a general purpose port to which any of a plurality of peripheral devices may be connected, in that a plurality of electrical connections connect a plurality of contacts of the connector to the electronic means, a group of said contacts having signal carrying functions determined by said electronic means; said electronic means being operative in response to a command signal indicating a function to be carried out to determine whether the indicated function requires transmission of signals by way of the general purpose port and a specific one of said plurality of peripheral devices with which communication is to be effected and in response to determining that said indicated function requires transmission of signals by way of said general purpose port with a specified one of said plurality of peripheral devices to set the signal carrying function of the contacts of said group to enable transmission of signals by way of the general purpose port to and from said specified peripheral device.

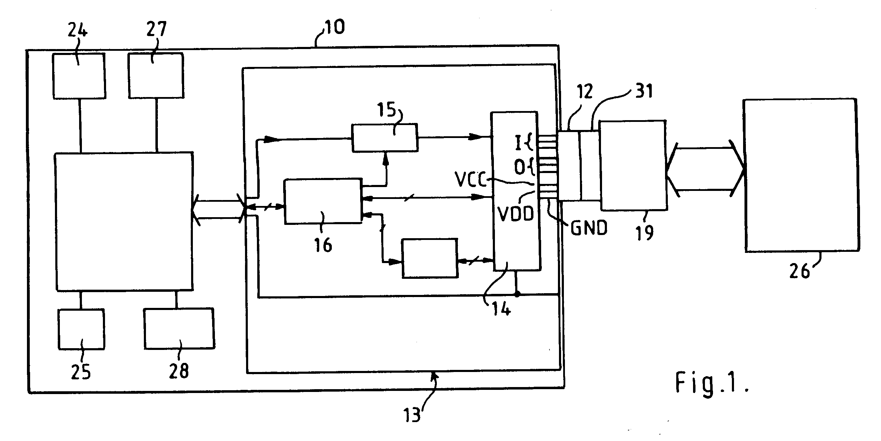

An embodiment of the invention will now be described with reference to the drawings in which:-
Figure 1 shows a block diagram of a franking machine with a general purpose port and external interface connected to an external device,
Figure 2 shows alternative connection of the franking machine by the external interface to other external devices,
Figure 3 shows a converter for use with an RS232 communication standard,
Figure 4 shows a converter for use with an RS422 communication standard.
Figure 5 illustrates steps in selecting a franking machine operation and corresponding configuration of a general purpose port of the machine.

A secure housing indicated by outline 10 contains electronic circuits 11 including a microprocessor for carrying out accounting functions on data held in registers 28 and data input by means of a keyboard 24. A display 27 is provided for the display of data input on the keyboard and for providing operational and instruction data to a user. Such circuitry is known in the art of franking machines. The registers include a descending register for available credit and an ascending register for the total accumulated usage of franking. These registers are duplicated to provide assurance that the data stored therein is error free and in addition further duplication of the registers may be provided to ensure correct data storage in the event of mal-function of any register. The registers also include a register for storing a transaction code. The circuitry 11 also carries out control functions and provides print element setting signals to set printing elements of a printer unit (not shown) of the franking machine to the value of franking keyed into the keyboard. The circuit generates a print initiation signal to cause operation of the printing elements when a franking operation has been validated.

In order to permit data transfer to and from the franking machine by means of electrical signals, a multi-way connector 12 is provided in a wall of the housing 10. The connector 12 has a plurality of contacts to provide connections for input signals and output signals. For example, the connector may provide a first set of three contacts for lines I1, I2, I3 for input signals and a second set of three contacts for lines O1, O2, O3 for output signals. Additional contacts VCC, VDD and GND are used to provide supply potentials of, say, 5 volts and ground potential.

The contacts of the connector 12 are connected to the circuits 11 of the franking machine by means of interface circuits 13. Connections to all the contacts, apart from that connected to ground potential, include high voltage protection circuits 14. These protection circuits prevent unauthorised or inadvertent application of damaging voltages to the internal circuits of the franking machine from the contacts of the connector 12. The protection circuits may include a spark gap and a "Tranzorb" each connected between the contact and ground to protect the franking machine from voltages in excess of 12 volts and a zener diode to provide protection against lower voltages in the range of 5.6 volts to 12 volts. Protection against excessive current flow in the connection is provided by means of a fuse. The 5 volt potential is provided from the internal power supply of the franking machine via a semiconductor switch 15 controlled to connect the 5 volt potential to the contact of the connector 12 only when an external device connected to the connector is enabled by control signals from the franking machine circuits 11. Alternatively, if desired, an independent source of potential may be provided which, if the current demand is low, may be a battery.

The interface circuits 13 include signal buffering 16 for data and control signals to and from and clock signals from the circuitry 11 of the franking machine. This buffering is achieved by means of open collector gates. In a practical implementation, these signals share a bus to the microcontroller in the circuits 11 with signals for the display and control functions. Therefore the signals to and from the interface circuits 13 time share the bus with the internal signals of the franking machine. Accordingly the signal buffering 16 is enabled for the allocated time share period.

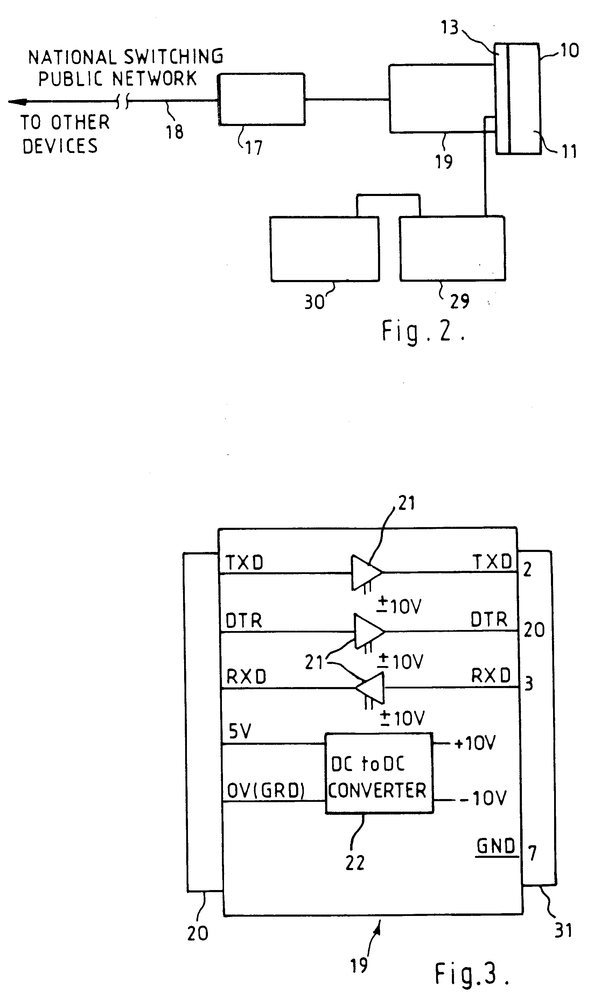

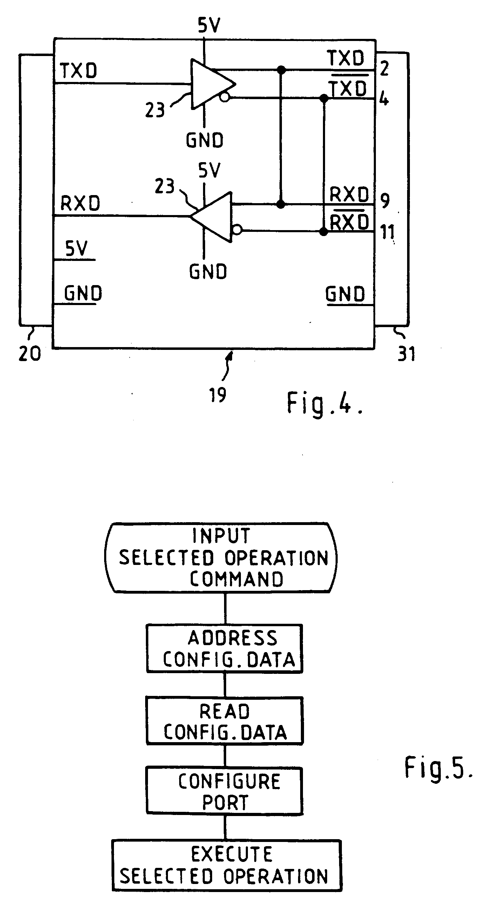

The function of each of the lines I1, I2, I3 and the lines O1, O2, O3 during a communication with another device is configured by operation of an internal control system of the franking machine in dependence upon the communication standard utilised by the other device. If the device connected to the franking machine operates to the RS232 standard, the input and output lines are configured to conform to that standard. For example, the line O1 will be allocated the function of "transmit data" (TXD), I1 will be allocated the function of "receive data" (RXD), the line O2 will be allocated the function of "data terminal ready" (DTR) and if desired the line I2 will be allocated the function "ready to send" (RTS). If the device connected to the franking machine operates to RS422 or some other communication standard the lines are allocated functions appropriate to the required standard. In addition to allocating the lines to specified functions, the configuration of the general purpose port also defines the data speed and characteristics of the lines. The operation of the internal control system is controlled by a user of the franking machine by input on the keyboard 24. The control circuitry 11 includes a non-volatile memory 25 which has stored therein data for configuring the lines of the communication port to each of a number of selectable communication standards. Preferably the input on the keyboard by the user of a desired mode of operation or function of the franking machine causes the accounting and control circuitry to access the memory 25 to effect configuration of the general purpose port to the communication standard associated with that selected operation or function of the machine. The steps involved in selecting a machine operation and the configuration of the general purpose port are illustrated in Figure 5. For example if a printer 26 is connected to the communication port and communicates in RS232 standard, selection of a print function by the user will result in configuration of the port to RS232 standard whereas if the user selects a weigh function, in which the output of a weighscale 29 (Figure 2) is to be received by the franking machine, or a remote display function in which data is displayed on a remote display device 30, the control system will access the memory 25 to read out data to effect configuration of the communication port such that it operates in current loop mode as used by the weighscale 29 and the remote display device 30.

It will be appreciated that in order for the general purpose communication port of the franking machine to be configurable to a communication standard, it is only necessary to write into the memory 25 the configuration data for that standard. Accordingly additional standards, changes to standards or newly devised standards can be accommodated by writing new data into the memory. In addition the memory may be utilised to store variable codes related to different modes of operation of the franking machine and the configuration of the port required for those modes of operation.

Thus it will be understood that data signals may be transmitted to and received from various devices connected to the franking machine by means of the communication port and which operate to communicate to different standards. A modem 17 to enable communication of data via the telephone network 18 may be connected as shown in Figure 2. The modem may be connected by a multi-way cable to the connector 12 or the modem may be constructed integrally with a connector for direct connection to the connector 12. Commonly available modems utilise a so-called RS232 interface standard for connection to other devices.

While the functions of the lines have been configured to the required communication standard, it may be necessary to convert the signal levels between the device and the franking machine. For this purpose a converter 19 such as that shown in Figure 3 would be provided for conversion to and from the signal levels of RS232. The RS232 standard utilises a 25 way D-type connector 31 of which pin number 2 carries transmitted data (TXD) to a peripheral device, pin number 3 carries received data (RXD) from the peripheral device and pin number 20 carries a data terminal ready signal (DTR) to the peripheral device. Pin number 7 is connected to ground. These pins 2, 3 and 20 are connected to a connector 20, for mating with the connector 12 of the franking machine, by suitable buffer devices 21 arranged to provide the required signal levels. A suitable semi-conductor device which is available on the market and includes the required buffer devices requires power supplies of +10 volts and -10 volts whereas the potential available from the franking machine is only +5 volts. Accordingly the converter 19 includes a DC to DC converter 22 operating from the +5 volt supply to provide the required +10 and -10 volt supplies. Alternatively, the modem may be constructed to provide the required signals for direct connection to the signal input and output connections of the franking machine.

Other devices which it is desired to connect to the franking machine may utilise other interface standards such as RS422. Accordingly for such devices an appropriate converter such as that shown in Figure 4 is provided. The RS422 standard utilises a 15 way D-type connector of which pin numbers 2 and 4 carry transmitted data (TXD) and its inverse (T̅X̅D̅) respectively and pins 9 and 11 carry received data (RXD) and its inverse (R̅X̅D̅) respectively. Signal buffers 23 are provided to convert the signals on pins 9 and 11 to a data input signal for the franking machine and to convert the data output signal from the franking machine to the transmitted data (TXD) and its inverse (T̅X̅D̅) on pins 2 and 4.

When it is desired to connect more than one device to the franking machine at the same time and such devices have different interface standards, a converter which connects directly to the connector 12 may be provided with a number of interfaces for conversion between the different standards respectively and the signal input and output of the franking machine. A further form of converter which may be utilised for connection to the connector 12 is one which receives and transmits optical signals along optical fibres and contains electro-optic converters to convert the optical signals to electrical signals and vice versa.

When secure data is to be received on one of the signal input lines of the connector 12, the data is received in encrypted form and the accounting and control circuit 11 is caused by an instruction input on the keyboard or from an external device via the connector 12 to operate under the steps of a stored program to decrypt the input code, validate the data and then carry out an operation such as adding the new credit represented by the received data to the credit currently registered in the descending register. Similarly by keying in an appropriate selected instruction on the keyboard, data may be read from a register and after encryption be transmitted via one of the signal output lines of connector 12. The contacts of the connector 12 may be connected to any remote device by connecting an appropriate converter or modem to the connector 12. Alternatively the contacts may be connected to the storage device of a portable member if such a member is plugged into the connector 12. Clock signals and, if required, control signals may be output on others of the output lines to control the reading and writing of data in the portable member.

When non-secure data is to be received or transmitted by way of the connector 12, the accounting and control circuit 11 is instructed by keying an appropriate instruction on the keyboard or by an instruction received via the connector 12 from an external device to cause the accounting and control circuit to operate under the steps of a stored program to, for example, receive signals from a weighscale and input these as a franking value instead of values input by the keyboard. Similarly other input instructions will cause the accounting and control device to transmit selected data to other devices connected to the connector 12.

In addition to the signal input and output connections described hereinbefore, the connector 12 may have further contacts providing connections for a current loop data transmission. The interface circuits 13 include an electro-optic coupler energised by received data on the loop to generate a data input signal to the circuits 11. Data output from the circuits 11 is transmitted to the loop by means of a switching transistor.

The input and output lines respectively from and to the connector 12 for input and output signals such as data and clock and/or control signals may be enabled by appropriate enabling of the gates of the signal buffering 16 of the interface circuits 13 by means of control signals.

## Claims

1. A franking machine for franking items of mail including electronic means (11) to carry out accounting functions in relation to usage of the machine in franking operations; storage registers (28) connected to said electronic means to store account records; said electronic means being responsive to command signals to carry out functions indicated by said command signals; a secure housing (10) securely containing said electronic means (11) and said storage registers (28); a communications port (12) extending through a wall of said housing to which a peripheral device external to the franking machine may be connected to communicate with said electronic means; characterised in that the communications port (12) is a general purpose port to which any of a plurality of peripheral devices (19, 29) may be connected, in that a plurality of electrical connections (I, O, VCC, VDD) connect a plurality of contacts of the connector (12) to the electronic means (11), a group of said contacts (I, O) having signal carrying functions determined by said electronic means (11); said electronic means being operative in response to a command signal indicating a function to be carried out to determine whether the indicated function requires transmission of signals by way of the general purpose port and a specific one of said plurality of peripheral devices with which communication is to be effected and in response to determining that said indicated function requires transmission of signals by way of said general purpose port with a specified one of said plurality of peripheral devices to set the signal carrying function of the contacts (I, O) of said group to enable transmission of signals by way of the general purpose port (12) to and from said specified peripheral device (19, 29).

2. A franking machine as claimed in claim 1 further characterised by memory means (25) to store signal carrying functions of the contacts (I, O) required for communication with at least one peripheral device and in that the electronic means (11) accesses the memory means (25) to determine the required signal carrying functions of the contacts.

3. A franking machine as claimed in claim 1 or 2 further characterised in that a first sub-group (O) of the group of contacts are assigned to carry signals output from the electronic means (11) and a second sub-group (I) of contacts are assigned to carry signals input to the electronic means (11), said electronic means being operative in response to the command signal to determine the signal carrying function of each contact in each of said sub-groups.

4. A franking machine as claimed in claim 1, 2 or 3 further characterised by signal conversion means (19) removably connected to said connector.

5. A franking machine as claimed in claim 4 further characterised in that the input and output signals on the input and output lines (I, O) of the general purpose port (12) have a first level which differs from a second level of signals in accordance with the communication standard to which the general purpose port is configured and the signal conversion means (19) includes signal level conversion means (21, 23) operative to convert signals at one of said first and second levels to signals having the other of said first and second levels.

6. A franking machine as claimed in any preceding claim further characterised by a power source and selectively operable switch means (15) to connect said source to one of the contacts (VCC, VDD) of the connector (12) of the general purpose port and wherein the electronic means (11) is operative in response to determination of communication with a peripheral device requiring power from the source to operate the switch means (15) to apply power to said one contact.

## Patentansprüche

1. Frankiermaschine zum Frankieren von Poststücken mit elektronischen Mitteln (11) zur Ausführung von Abrechnungsfunktionen in Relation zum Gebrauch der Maschine bei Frankieroperationen, Speicherregistern (28) zum Speichern von Abrechnungsaufzeichnungen, die mit den elektronischen Mitteln verbunden sind, wobei die elektronischen Mittel auf Steuersignale zur Ausführung von Funktionen ansprechen, die durch die Steuersignale angezeigt werden, einem Sicherheitsgehäuse (10) zur sicheren Aufnahme der elektronischen Mittel (11) und der Speicherregister (28) und einem Verbindungsanschluß (12), der sich durch eine Wand des Gehäuses erstreckt und mit dem eine Peripherieeinrichtung außerhalb der Frankiermaschine verbunden werden kann, um mit den elektronischen Mitteln zu kommunizieren,
dadurch gekennzeichnet,
daß der Verbindungsanschluß (12) als Universalanschluß ausgebildet ist, mit dem eine Mehrzahl von Peripherieeinrichtungen (19,29) verbunden werden kann, daß eine Mehrzahl von elektronischen Verbindungen (I,O,VCC,VDD) eine Mehrzahl von Kontakten des Anschlusses (12) mit den elektronischen Mitteln (11) verbindet, wobei eine Gruppe der Kontakte (I,O) ein Signal aufweist, das Funktionen überträgt, die von den elektronischen Mitteln (11) bestimmt sind; wobei die elektronischen Mittel in Antwort auf ein Steuersingal, das eine auszuführende Funktion anzeigt, um zu bestimmen, ob die angezeigte Funktion die Übertragung von Signalen über den Universalanschluß zu einer speziellen der Mehrzahl von Peripherieeinrichtungen erfordert, mit der eine Kommunikation zu bewirken ist, und in Antwort auf die Bestimmung ansprechen, daß die angezeigte Funktion die Übertragung von Signalen über den Universalanschluß zu einer speziellen der Mehrzahl der Peripherieeinrichtungen erfordert, um das Signal zur Ausführung einer Funktion der Kontakte (I,O) der Gruppe zu setzen, um die Übertragung von Signalen über den Universalanschluß (12) zu und von der speziellen Peripherieeinrichtung (19,25) zu ermöglichen.

2. Frankiermaschine nach Anspruch 1,
dadurch gekennzeichnet,
daß Speichermittel (25) zur Speicherung eines Signals zur Ausführung von Funktionen der Kontakte (I,O) vorgesehen sind, die zur Kommunikation mit wenigstens einer Peripherieeinrichtung erforderlich sind, und daß die elektronischen Mittel (11) zur Bestimmung des erforderlichen Signals zur Ausführung von Funktionen der Kontakte zu den Speichermitteln (25) Zugang haben.

3. Frankiermaschine nach Anspruch 1 oder 2,
dadurch gekennzeichnet,
daß eine erste Untergruppe (O) der Gruppe der Kontakte zur Ausführung von Ausgangssignalen aus den elektronischen Mitteln (11) vorgesehen ist und eine zweite Untergruppe (I) der Kontakte zur Einführung von Eingangssignalen zu den elektronischen Mitteln (11) vorgesehen ist, wobei die elektronischen Mittel in Antwort auf das Steuersignal zur Bestimmung des Signals zur Ausführung der Funktion jedes Kontaktes in jeder Untergruppe ansprechbar sind.

4. Frankiermaschine nach Anspruch 1, 2 oder 3,
gekennzeichnet durch
lösbar mit dem Verbindungsanschluß verbundene Signalumformungsmittel (19).

5. Frankiermaschine nach Anspruch 4,
dadurch gekennzeichnet,
daß die Eingangs- und Ausgangssignale auf den Eingangs- und Ausgangskreisen (I,O) des Universalanschlusses (12) eine erste Stufe aufweisen, die sich von einer zweiten Stufe von Signalen in Übereinstimmung mit dem Kommunikationsstandard, zu dem der Universalanschluß konfiguriert ist, unterscheiden, und daß die Signalumformungsmittel (19) Signalstufenumformungsmittel (21,23) einschließen, die dazu dienen, Signale bei einer der ersten und zweiten Stufen zu Signalen umzuformen, die die andere der ersten und zweiten Stufen aufweisen.

6. Frankiermaschine nach irgendeinem der vorhergehenden Ansprüche,
gekennzeichnet durch
eine Energiequelle und selektiv bedienbare Schaltmittel (15) zur Verbindung der Quelle mit einem der Kontakte (VCC,VDD) des Universalanschlusses (12), wobei die elektronischen Mittel (11) in Antwort auf die Bestimmung der Kommunikationen mit einer Peripherieeinrichtung ansprechen, die Energie von der Quelle benötigt, um die Schaltmittel (15) zur Beaufschlagung des einen Kontaktes mit Energie zu betätigen.

## Revendications

1. Machine à affranchir pour l'affranchissement d'articles de courrier, comprenant des moyens électroniques (11) pour effectuer des fonctions de comptabilité relatives à l'utilisation de la machine dans les opérations d'affranchissement ; des registres de stockage (28) branchés aux moyens électroniques pour stocker des enregistrements de compte ; les moyens électroniques répondant à des signaux de commande pour effectuer des fonctions indiquées par ces signaux de commande ; un boîtier de sécurité (10) contenant de façon sécurisée les moyens électroniques (11) et les registres de stockage (28) ; une prise de communications (12) traversant une paroi du boîtier, à laquelle on peut brancher un dispositif périphérique extérieur à la machine à affranchir, pour assurer les communications avec les moyens électroniques ; caractérisée en ce que la prise de communication (12) est une prise à application générale à laquelle on peut brancher n'importe lequel d'une pluralité de dispositifs périphériques (19, 29) ; en ce qu'une pluralité de connexions électriques (I, O, VCC, VDD) branchent une pluralité de contacts du connecteur (12) aux moyens électroniques (11), un groupe de ces contacts (I, O) présentant des fonctions de transport de signaux déterminées par les moyens électroniques (11) ; ces moyens électroniques fonctionnant en réponse à un signal de commande indiquant une fonction à effectuer, pour déterminer si la fonction indiquée nécessite la transmission des signaux par la prise à application générale et par l'un, spécifique, de la pluralité des dispositifs périphériques avec lesquels la communication doit être effectuée et, en réponse à la détermination que la fonction indiquée nécessite la transmission des signaux par la prise à application générale avec l'un, spécifié, de la pluralité de dispositifs périphériques, pour régler la fonction de transport de signaux des contacts (I, O) du groupe, de manière à déclencher la transmission des signaux par la prise à application générale (12) afin que ces signaux aillent vers le dispositif périphérique spécifié (19, 29) et reviennent de celui-ci.

2. Machine à affranchir selon la revendication 1, caractérisée en outre par des moyens de mémoire (25) pour stocker les fonctions de transport de signaux des contacts (I,O) nécessaires pour la communication avec au moins un dispositif périphérique, et en ce que les moyens électroniques (11) accèdent aux moyens de mémoire (25) pour déterminer les fonctions de transport de signaux requises des contacts.

3. Machine à affranchir selon l'une des revendications 1 ou 2, caractérisée en outre en ce que les contacts d'un premier sous-groupe (O) du groupe de contacts, sont affectés au transport des signaux sortant des moyens électroniques (11), et en ce que les contacts d'un second sous-groupe (I) des contacts, sont affectés au transport des signaux entrant dans les moyens électroniques (11), ces moyens électroniques fonctionnant en réponse au signal de commande pour déterminer la fonction de transport de signal de chaque contact dans chacun des sous-groupes.

4. Machine à affranchir selon l'une des revendications 1, 2 ou 3, caractérisée en outre par des moyens de conversion de signaux (19) branchés de manière amovible au connecteur.

5. Machine à affranchir selon la revendication 4, caractérisée en outre en ce que les signaux d'entrée et de sortie des lignes d'entrée et de sortie (I,O) de la prise à application générale (12) présentent un premier niveau qui diffère d'un second niveau de signaux suivant le standard de communication dans lequel la prise à application générale est configurée, et en ce que les moyens de conversion de signaux (19) comprennent des moyens de conversion de niveau de signal (21, 23) fonctionnant pour convertir les signaux à l'un des premier et second niveaux, en signaux présentant l'autre des premier et second niveaux.

6. Machine à affranchir selon l'une quelconque des revendications précédentes, caractérisée en outre par une source de puissance et par des moyens de commutation (15) manoeuvrables sélectivement pour brancher la source à l'un des contacts (VCC, VDD) du connecteur (12) de la prise à application générale, et en ce que les moyens électroniques (11) fonctionnent en réponse à la détermination de la communication avec un dispositif périphérique nécessitant de la puissance de la source, pour faire fonctionner les moyens de commutation (15) de manière à appliquer la puissance à ce contact.
